# EUROPEAN PATENT SPECIFICATION

(11) **EP 2 672 590 B1**
(45) Date of publication and mention of the grant of the patent: **14.01.2015**
(21) Application number: 12171309.3
(22) Date of filing: 08.06.2012
(51) Int. Cl.: H02B 11/04, H02G 5/06

(54) **An electrically insulating shell, an electrically insulating device comprising such insulating shell, and related switchgear panel**
Elektrisch isolierende Ummantelung, elektrisch isolierende Vorrichtung mit einer solchen isolierenden Ummantelung und zugehörige Schalttafel
Coque électriquement isolante, dispositif d'isolation électrique comprenant une telle coque isolante et panneau d'appareillage de commutation associé

(43) Date of publication of application: 11.12.2013
(73) Proprietor: ABB Technology AG, 8050 Zürich (CH)
(72) Inventor: Carera, David, 24048 Treviolo (BG) (IT); Pellegrini, Fabio, 24128 Bergamo (IT)
(74) Representative: De Santis, Giovanni

(56) References cited:
- EP-A1- 0 880 208
- EP-A1- 2 148 403
- FR-A1- 2 214 185
- US-A- 4 723 917
- US-A- 4 818 822

## Description

The present disclosure relates to an electrically insulating shell, to an electrically insulating device comprising such insulating shell, and to a related switchgear panel.

The electrically insulating shell and related electrically insulating device according to the present disclosure are particularly suitable for being used inside the cabinet of electric switchgear panels, in particular when retrofitting existing switchgear panels, and will be described by making particular reference to such applications, without intending however to limit their possible broader applications.

The use of electrically insulating devices is well known and widely spread in the field of electricity.

Such insulating devices are devised basically to electrically insulate the conductor to which they are associated from the surrounding environment; in addition, depending on the specific applications, they are usually required to guarantee a good mechanical robustness and/or thermal stability for a quite long life-time.

Patent document EP0880208 discloses a modular wiring unit wherein a plate member to which it is possible to connect the wiring that leads to an electrical distribution line.

The plate member comprises two pluralities of recesses for connection to the distribution line by means of plugs and to a further adjacent plate member, and has a base member inside which there is positioned a laminated pack for insertion of pins of the plugs and a covering member coupled to the base member.

Patent document US 4,723,917 discloses a low voltage distribution device which comprises a structure in a molded insulating material comprising two rectangular walls connected by a transversal partition. Rails are embedded in the transversal partition which serve on one side to support bus-bars for current inflow and on the other side they constitute power connections. Patent document EP2148403 discloses a plastic raceway whose cover has a wall elongated along a longitudinal direction encircled by two lateral rims; each one of the rims is conformed in such a manner to be clipped on lateral wings of a U-shaped gutter support and is provided with a set of incipient ruptures periodically spaced in the longitudinal direction. The incipient ruptures contain an opening traversing each of the rims, where the incipient ruptures are entirely contained in back of the wing.

Further, and to the extent possible, they should also have a whole structure which is cheap to be produced, easy to be installed, and as much as possible flexible, i.e. adaptable to different configurations without incurring in substantial or very cumbersome modifications.

These latter requirements play a more important role when insulating devices have to be installed inside the cabinet of switchgear panels since more than one insulating device is usually required, the space available is usually limited, and the distance between conductive parts is rather short. These aspects are even more important when retrofitting an existing switchgear panel; indeed, in these cases, when instead of replacing the entire switchgear panel, a user replaces only the existing circuit breaker with a new and different one, a problem of compatibility may arise for example between the new circuit breaker to be used and the structural and/or functional characteristics of the existing switchgear panel. For example, the distance between the pre-existing contact pieces of the electric circuit into which the circuit breaker has to be inserted may be totally different and unsuitable with respect to the distance of the corresponding input and output connection contacts of the circuit breaker; hence, the installer should form "ad hoc" paths for electrically connecting each contact of the circuit breaker to the respective contact piece of the associated circuit.

As a matter of fact, an insulating device should have first a structure adapted to be applied to the specific conductive path to which is it associated; but, for having a greater market appeal, it should have an own structure applicable to different paths at least within the same cabinet and it should also fit with limits and constraints imposed by the surrounding parts of the panel, without imposing substantial modifications to its structure.

The present disclosure is aimed at providing a solution which allows satisfying at least some of the above indicated needs and in particular it provides an electrically insulating shell suitable to be operatively associated to an electrical conductor comprising one or more pieces connected together, the insulating shell comprising a first half shell and a second half shell devised to be mutually connected together, characterized in that said first half shell and said second half shell are shaped so as to define, once connected together, a central part delimiting a substantially closed space encasing inside it a corresponding first portion of said electrical conductor, a first hollow portion protruding from a first side of said central part, said first hollow portion being in space communication with the inner space of said closed central part and adapted to surround a corresponding second portion of said electrical conductor suitable for connection to a contact piece of an electric circuit, and a second hollow portion protruding from said central part from a second side opposite to said first side, said second hollow portion being in space communication with the inner space of said closed central part and adapted to surround a corresponding third portion of said electrical conductor suitable for connection to a connection contact of a circuit breaker associated to said electrical circuit, and wherein at least one of said first half shell and second half shell comprises a shaped body having a plurality of reference notches adapted to allow cutting away portions of the shaped body itself.

The present disclosure also encompasses an electrically insulating device **characterized in that** it comprises one or more insulating shells as defined by the related appended claims and described hereinafter, and an insulating plate having a central part perforated with one or more holes inside each of which the second portion of a corresponding insulating shell is suitable to be inserted. The present disclosures also relates to a switchgear panel comprising a cabinet, a circuit breaker positioned inside said cabinet and suitable to be electrically connected in input and output to an associated electrical circuit along electrical connection paths formed each by one or more conductive pieces, **characterized in that** it comprises at least one electrically insulating shell as defined by the related appended claims and described hereinafter, said at least one insulating shell being operatively positioned along one of said conductive path so as to electrically insulate at least a portion of the path from the surrounding environment.

Further, the present disclosure encompasses also a switchgear panel comprising a cabinet, a circuit breaker positioned inside said cabinet and having a plurality of connection contacts suitable to be electrically connected each to a corresponding contact piece of an associated electrical circuit along a respective connection path formed by one or more conductive pieces, **characterized in that** it comprises an electrically insulating device as defined by the related appended claims and described hereinafter, and wherein the insulating plate of the insulating device comprises one or more side walls which protrude transversally from a central part of the insulating plate and are mechanically connected to a further component of the panel.

Further characteristics and advantages will emerge from the description of preferred, but not exclusive embodiments of an electrically insulating shell, electrically insulating device, and related switchgear panel, according to the present disclosure, non-limiting examples of which are provided in the attached drawings, wherein:
figure 1 is a perspective view showing an insulating shell according to the present disclosure under assembling with an associated conductor;
figure 2 is a perspective view showing an electrically insulating shell according to the present disclosure, assembled with an associated conductor;
figures 3 and 4 illustrate components of the insulating shell of figure 1 disassembled and seen from different perspectives;
figure 5 is a perspective view illustrating an exemplary embodiment of an electrically insulating device according to the present disclosure, comprising a plurality of insulating shells as the one depicted in figure 1;
figure 6 illustrates an electrical switchgear panel with a circuit breaker connected to the electrically insulating device of figure 5.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" is used in the following description while referring to any component as a whole, or to any part of a component, or to a whole combinations of components, or even to any part of a combination of components, it has to be understood that it means and encompasses the structure, and/or configuration and/or shape and/or positioning of the related component or part thereof, or combinations of components or part thereof, such term refers to.

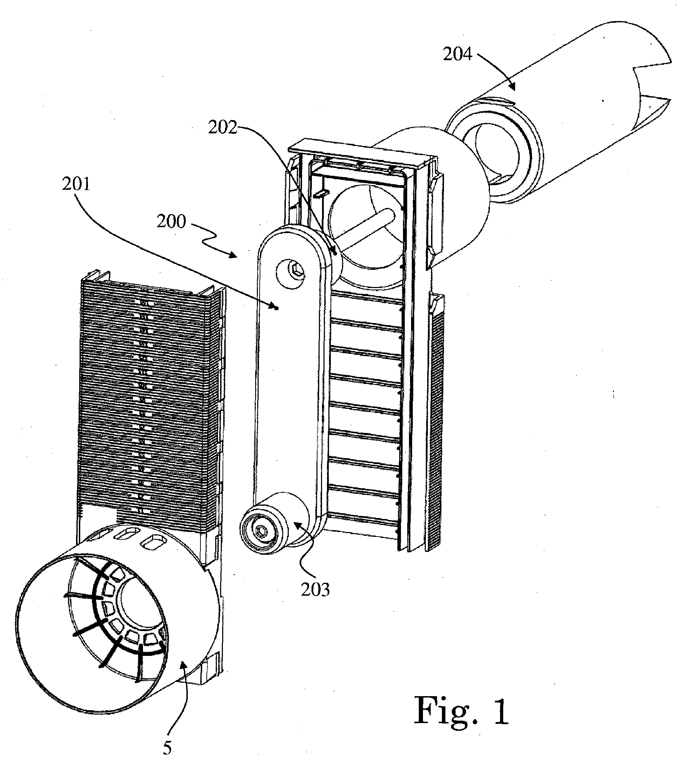

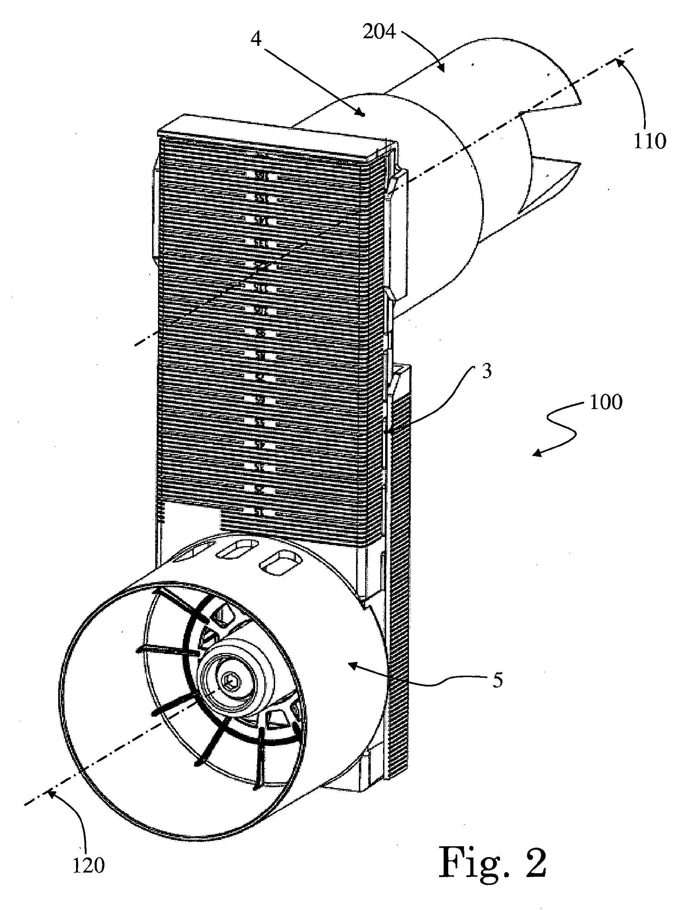

Figures 1 and 2 show an electrically insulating shell 100 according to the present disclosure under assembling- and assembled with- an electrical conductor 200, respectively.

Such an electrical conductor 200 may comprise one or more pieces connected together according to various applications; for example, the exemplary conductor 200 depicted in the attached figures, comprises a first portion 201, e.g. link-shaped, a second portion 202, e.g. cylindrical or tubular, which protrudes transversely from a first side of the first portion 201, and a third portion 203, for instance tubular or cylindrical, which protrudes from a second side of the first shaped portion opposite to the first side. Clearly, the conductor 200 depicted in the figures has to be understood only for illustrative and non-limiting purposes; for example, the shape, number, and/or the relative position of the parts may change.

The insulating shell 100 comprises a first half shell 1 and a second half shell 2 devised to be mutually connected together and shaped so as to define, once connected together (as illustrated in figure 2): a central part 3 delimiting a substantially closed space encasing inside it a corresponding first portion of the electrical conductor 200, e.g. the first portion 201; a first hollow portion 4 protruding transversely from a first side of the central part 3, for instance at an end portion thereof. The cavity of the first hollow portion 4 is in space communication or continuity with the inner space of the closed central part 3 and is adapted to surround an associated second portion of the electrical conductor 200, e.g. the second portion 202. The two shells 1 and 2 once connected define also a second hollow portion 5 which protrudes transversely from a second side opposite to said first side of the central part 3; for instance and as illustrated in the figures, the second hollow portion 5 is located at a second end of the central part 3 opposite to its first end where the first hollow portion 4 is provided. The cavity of the second hollow portion 5 is also in space communication or continuity with the inner space of the closed central part 3 and is adapted to surround the corresponding third portion of the electrical conductor 200, e.g. the third portion 203.

In this way, in practice, the insulating shell 100 defines a continuous path (formed by the cavity of the first hollow portion 4, the inner space encased by the central part 3 which has the form of a box-like element, and the cavity of the second hollow portion 5) along and inside which a conductor is placed and electrically insulated from the surrounding environment. Preferably, at least one of the first half shell 1 and the second half shell 2 comprises a shaped body having a plurality of reference notches 30 adapted to allow cutting away portions of the respective shaped body itself, thus allowing to easily adjust the size of the insulating shell 100, and in particular of its central part 3 according to the specific application.

Moreover, the first half shell 1 and the second half shell 2 comprise first coupling means 6 and second coupling means 7, respectively, which are suitable to mutually engage so as to mechanically connect each other the first half shell 1 and the second half shell 2 in a snap-fit way.

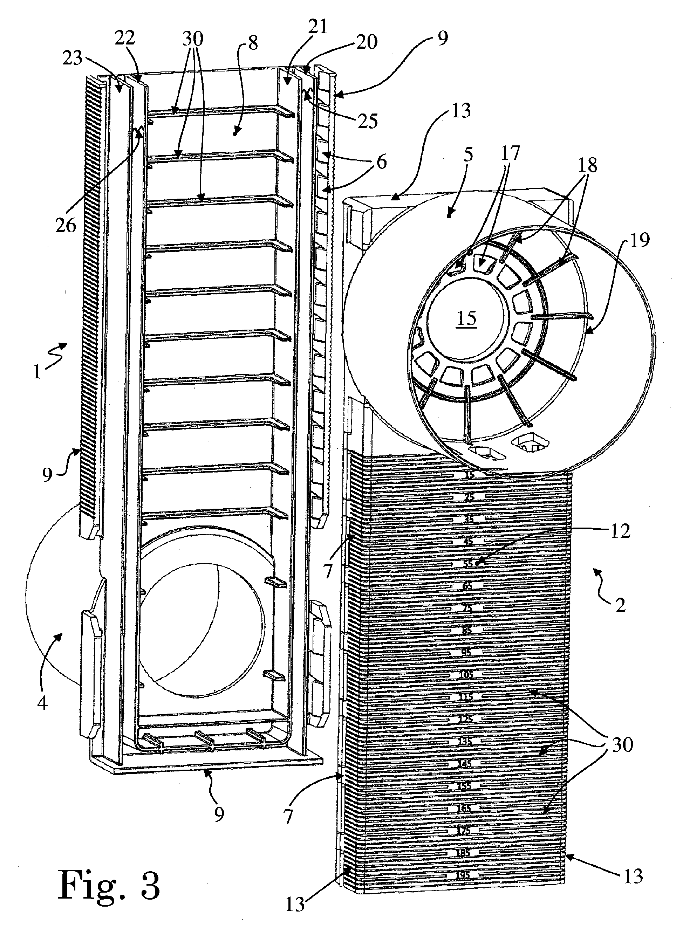

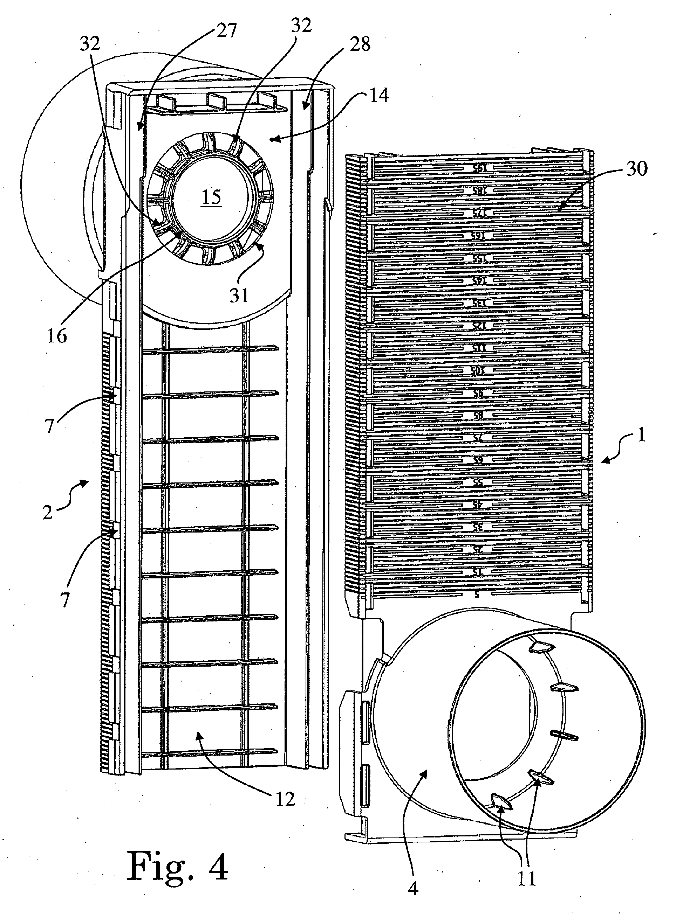

As better illustrated in figures 3 and 4, the first half shell 1 comprises a shaped body having a first base wall 8, one or more first side walls 9 which protrude transversally from the first base wall 8, and a first hollow tubular portion 4 which is made integral with and protrudes for example perpendicularly from the first base wall 8, along a reference axis 110, in a direction opposite from that of the one or more first side walls 9; the first hollow tubular portion 4, in the exemplary embodiment illustrated, forms the first hollow portion 4 of the insulating shell 100.

The first coupling means 6 comprise one or more teeth 6 provided on at least one of the one or more first side walls 9; in the exemplary embodiment illustrated, a plurality of teeth 6 is provided on both the two vertical side walls 9.

In addition, a first plurality of reference notches 30 are provided at least along the first base wall 8 and are adapted to allow cutting away portions of its shaped body so as to adjust the size, and in particular the length of the first half shell 1 measured along a direction perpendicular to the extension (i.e. the reference axis 110) of the first hollow tubular portion 5.

As illustrated, such notches 30 are indexed with reference tags ("195, "185" etc.) which give an immediate visual indication to a user of the relative length quote of the first base wall 8.

Further, the illustrated first half shell 1 is provided with a first plurality of centering fins 11, which are provided on the inner surface of the first hollow tubular portion 4; such fins 11 are devised to allow a correct position and centering of a piece of conductor which may be inserted in and coupled with the first hollow tubular portion, such as for example a tubular conductor 204 illustrated in figures 1 and 2.

In turn, the second half shell 2 comprises a shaped body having a second base wall 12, one or more second side walls 13 which protrudes transversally from the second base wall 12, and a second hollow tubular portion 5 which is made integral with and protrudes perpendicularly from the second base wall 12 along a reference axis 120, in a direction opposite from that of the one or more second side walls 13; the second hollow tubular portion 5, in the exemplary embodiment illustrated, forms the second hollow portion 5 of the insulating shell 100.

The second coupling means 7 comprise one or more hooks 7 which are suitable to engage each with a corresponding tooth 6 and are provided on at least one of the one or more second side walls 13; in the exemplary embodiment illustrated, a plurality of hooks 7 is provided on both the two vertical side walls 13.

In particular, the second hollow tubular portion 5 of the second half shell 2 comprises, at the second base wall 12, a bottom wall 14 having a central part with a main hole 15 surrounded by a contour ring 16. The bottom wall 14 can be part of or additional to the second base wall 12 itself.

A plurality of secondary holes 17 are provided circumferentially around the central main hole 15 on the outer part of the contour ring 16; a plurality of lugs 18 runs between the external rim 19 of the plurality of secondary holes 17 and a notch 31 is provided for example circumferentially at the external border of the central part. The notch 31 allows cutting away, when needed, the central part of the bottom wall comprising the main hole 15, the contour rim 16, the secondary holes 17 and the plurality of lugs 18. In the exemplary embodiment illustrated, there are also additional notches 32 associated with corresponding lugs 18.

In this way, for example it is possible to have a larger hole for the second hollow portion 5, and therefore easily adapt the insulating shell 100 to a part of conductor 203 having a bigger size.

In the exemplary embodiment illustrated, likewise the first shell 1, also the second half shell 2 comprises a plurality of reference notches 30 which are provided at least along the second base wall 12 and are adapted to allow cutting away portions of its shaped body so as to adjust the size, and in particular the length of the second half shell 2 measured along a direction perpendicular to the extension (i.e. the second reference axis 120) of the second hollow tubular portion 4.

Also the notches 30 provided on the second half shell 2 are indexed with reference tags ("195, "185" etc.) which give an immediate visual indication to a user of the relative length quote of the second base wall 12.

As illustrated, the first half shell 1 comprises a first insulating barrier 20, a second insulating barrier 21, a third insulating barrier 22, and a fourth insulating barrier 23 which all extend from one side of the first base wall 8 substantially parallel to each other and to the vertical first side walls 9; in particular, the first and second insulating barriers 20, 21 are positioned close to each other and spaced apart from each other of a first space 25, while the third and fourth insulating barriers 22, 23 are positioned close to each other and spaced apart from each other of a second space 26.

In turn, the second half shell 2 comprises a fifth insulating barrier 27 and a sixth insulating barrier 28 which extend from one side of the second base wall 12 substantially parallel to each other and to the second vertical side walls 13.

The fifth insulating barrier 27 and the sixth insulating barrier 28 are adapted to enter the first space 25 and the second space 26, respectively when the first and second half shells 1, 2 are mutually connected.

In this way a kind of geometrical labyrinth is created at the central part 3, thus contributing to improve the electrical insulation.

In practice, it has been found that the electrically insulating shell 100 according to the present disclosure gives some significant improvements over known prior art according to a solution flexible, quite simple and mechanical sturdy; in particular, it is possible to provide a very compact solution which can be easily adapted to different types of contact pieces or connecting paths; many components, if not even all, can be standardized and may be produced in series, or require very minor size modifications in order to be used.

The electrically insulating shell 100 according to the present disclosure is particularly suitable for being used in switchgear panels, and in particular when retrofitting already existing switchgear panels; hence, as it will be described hereinafter, the present disclosure also relates to a switchgear panel comprising a cabinet, a circuit breaker positioned inside said cabinet and suitable to be electrically connected in input and output to an associated electrical circuit along electrically connection paths formed each by one or more conductive pieces, **characterized in that** it comprises at least one electrically insulating shell 100 as described and defined in the appended relevant claims, wherein the at least one insulating shell 100 is operatively positioned along one associated conductive path of said conductive paths so as to electrically insulate a portion of the associated conductive path from the surrounding environment.

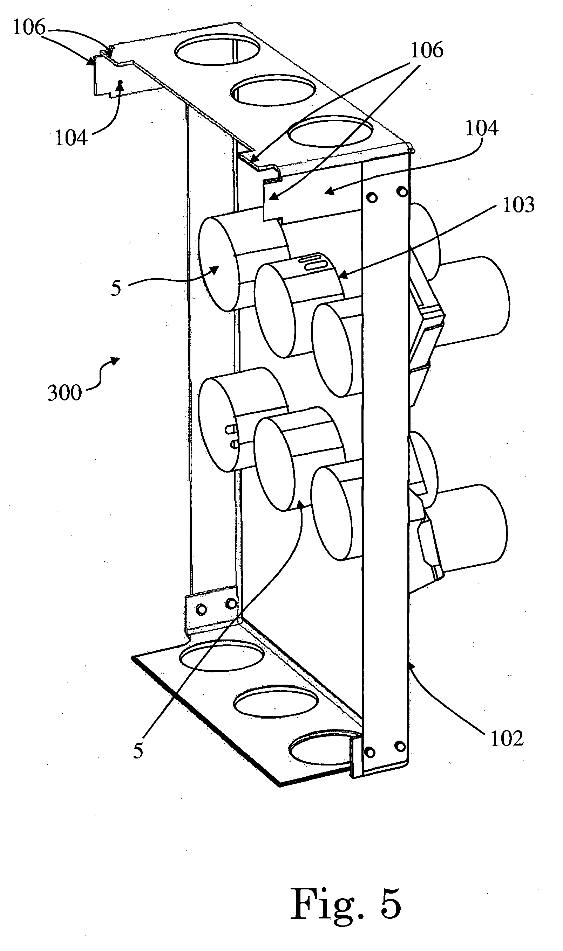

Clearly, there could be used one or more of such insulating shells 100 at the same time, and what is more, the insulating shells 100 can be used independently from each other or, as illustrated in the example of figure 5, they can be combined with one or more further insulating components in order to contribute forming different types of insulating assemblies for even easier adaption to the specific application.

Figure 5 illustrates a preferred example of an electrically insulating device 300 which comprises an electrically insulating plate 102 having a central part perforated with one or more holes 103 inside each of which the second portion 5 of a corresponding insulating shell 100 is suitable to be inserted and mechanically coupled with the plate 102. Therefore, the present disclosure also encompasses an electrically insulating device 300 **characterized in that** it comprises one or more insulating shells 100 as previously described and defined in the appended claims, and an insulating plate 102 having a central part perforated with one or more holes 103 inside each of which the second portion 5 of a corresponding insulating shell 100 is suitable to be inserted.

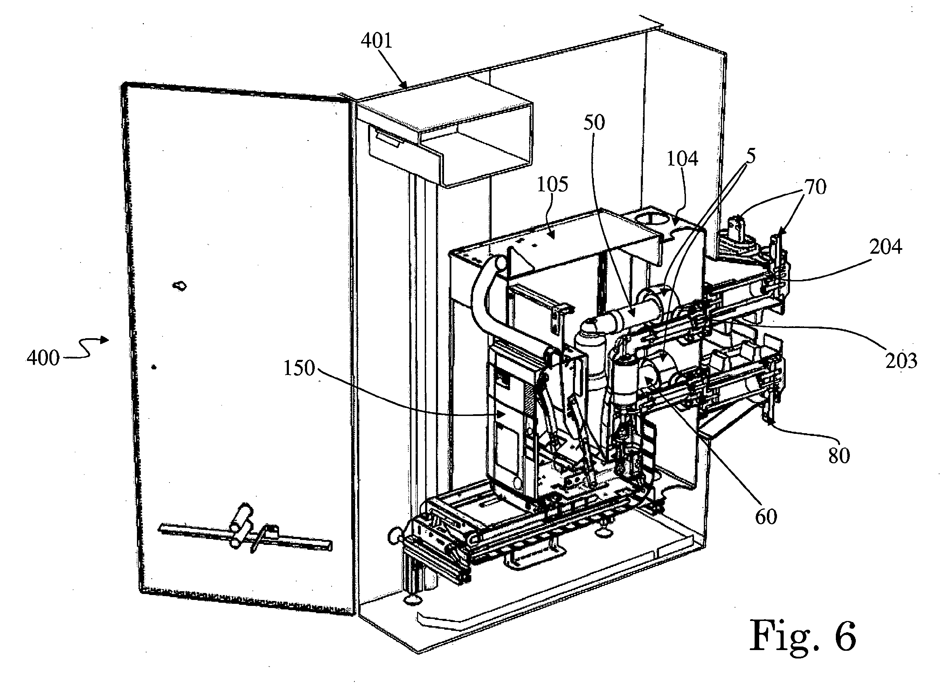

In the example illustrated in figure 5, the insulating plate 102 comprises one or more side walls 104 which protrude transversally, preferably perpendicularly, from the central part and are adapted to be mechanically connected to another component of a switchgear panel; in the exemplary embodiment of figure 5, such side walls 104 are for instance defined at the upper part of and are mechanically connected to, e.g. screwed, the central part of the plate 102. Figure 6 illustrates an exemplary embodiment of a switchgear panel 400, which can be also indicated with the equivalent terms of electric switchboard, or simply switchgear or similar definitions; the panel 400 usually comprises a metallic cubicle or cabinet 401 (shown in figure 6 partially cut for the sake of better illustrating the internal parts) that houses various apparatuses and equipment, and in particular a circuit breaker 150. According to solution well-known or readily available to those skilled in the art, the circuit breaker 150 comprises a plurality of connection contacts 50, 60; each connection contact 50 (or 60) is suitable to be electrically connected to a corresponding contact piece 70 (or 80) of an associated electrical circuit along a respective connection path formed by one or more conductive pieces suitably shaped, such as for instance the illustrated conductor pieces 201, 202, 203, 204. For example, the upper contact pieces 70 are connected to a power source while the lower contact pieces 80 can be connected to a supplied and protected load.

As illustrated, in this case, for each connection between a connection contact 50 (or 60) and the respective piece 70 (or 80) there is provided a corresponding insulating shell 100 (partially visible); each shell 100 is inserted with its portion 5 inside a hole 103 of the insulating plate 102, while the side walls 104 of the plate 102 are connected to a structural element, e.g. a metallic plate 105 provided inside the cabinet. For example, the protruding teeth 106 of the side walls 104 are inserted into recesses of the metallic plate 105. In this way, the entire insulating assembly results compact and sturdy and for instance a new switchgear panel can be retrofitted with a new, standard and non-modified circuit breaker, even without any particular modification to switchgear panel itself or the insulating device itself. In fact, the holes 103 in the insulating plate can be defined in the desired position, while the insulating shells 100, thanks to their structure have a certain degree of positioning relative to the plate itself and the associated conductors 200 that they are devised to insulate; in addition, when more shells 100 are used, possible problems of total space available in the cabinet or among the shells 100 themselves can be faced thanks to the possibility, as previously described, of easily adjust the size and therefore the encumbrance of each shell 100.

Clearly, and as mentioned above, it is always possible, even inside any switchgear panel, to use one or more electrically insulating shells 100 alone, namely without combining them with the insulating plate 102 or any else insulating component; for example, in the switchgear panel 400 the shells 100 can be coupled with the associated conductors as illustrated in figure 6 but without using the plate 102.

The electrically insulating shell 100, the electrically insulating device 300 and related switchgear panel 400 thus conceived, are susceptible of modifications and variations, all of which are within the scope of the inventive concept including any combination of the above described embodiments which have to be considered as encompassed by the above description; all details may further be replaced with other technically equivalent elements. In practice, the materials, so long as they are compatible with the specific use, as well as the individual components, may be any according to the requirements and the state of the art.

## Claims

1. An electrically insulating shell (100) suitable to be operatively associated to an electrical conductor (200) comprising one or more pieces connected together, the insulating shell (100) comprising a first half shell (1) and a second half shell (2) devised to be mutually connected together, **characterized in that** said first half shell (1) and said second half shell (2) are shaped so as to define, once connected together, a central part (3) delimiting a substantially closed space encasing inside it a corresponding first portion (201) of said electrical conductor (200), a first hollow portion (4) protruding from a first side of said central part (3), said first hollow portion (4) being in space communication with the inner space of said closed central part (3) and adapted to surround a corresponding second portion (202) of said electrical conductor suitable for connection to a contact piece (70) of an electric circuit, and a second hollow portion (5) protruding from said central part (3) from a second side opposite to said first side, said second hollow portion (5) being in space communication with the inner space of said closed central part (3) and adapted to surround a corresponding third portion (203) of said electrical conductor (200) suitable for connection to a connection contact (50) of a circuit breaker (150) associated to said electrical circuit, and wherein at least one of said first half shell (1) and second half shell (2) comprises a shaped body having a plurality of reference notches (30) adapted to allow cutting away portions of the shaped body itself.

2. An electrically insulating shell (100) according to one or more of the previous claims wherein said first half shell (1) and said second half shell (2) comprise first coupling means (6) and second coupling means (7), respectively, which are suitable to mutually engage so as to mechanically connect each other said first half shell (1) and said second half shell (2) in a snap-fit way.

3. An electrically insulating shell (100) according to one or more of the previous claims, wherein said first half shell (1) comprises a shaped body having a first base wall (8), one or more first side walls (9) protruding transversally from said first base wall (8), said first coupling means (6) comprising one or more teeth (6) provided on at least one of said one or more first side walls (9), and wherein said first hollow portion (4) comprises a first hollow tubular portion (4) which is made integral with and protrudes perpendicularly from said first base wall (8) in a direction opposite from that of said one or more first side walls (9).

4. An electrically insulating device (100) according to claim 3, wherein said first half shell (1) comprises a first plurality of reference notches (30) which are provided at least along said first base wall (8) and are adapted to allow cutting away portions of its shaped body so as to adjust the length of the first half shell (1).

5. An electrically insulating shell (100) according to one or more of the previous claims, wherein said first half shell (1) comprises a first plurality of centering fins (11) provided on the inner surface of said first hollow tubular portion (4).

6. An electrically insulating shell (100) according to one or more of the previous claims, wherein said second half shell (2) comprises a shaped body having a second base wall (12), one or more second side walls (13) protruding transversally from said second base wall (12), said second coupling means (7) comprising hooks (7) provided on at least one of said one or more second side walls (13), and wherein said second hollow portion (5) comprises a second hollow tubular portion (5) which is made integral with and protrudes perpendicularly from said second base wall (12) in a direction opposite from that of said one or more second side walls (13).

7. An electrically insulating shell (100) according to one or more of the previous claims wherein said second hollow tubular portion (5) comprises a bottom wall (14) having a central part comprising a main hole (15), said bottom wall (14) comprising one or more notches (31, 32) so as to allow cutting away said central part comprising said main hole (15).

8. An electrically insulating shell (100) according to one or more of claims 7 and 8, wherein said second half shell (2) comprises a plurality of reference notches (30) which are provided at least along said second base wall (12) and are adapted to allow cutting away portions of its shaped body so as to adjust the length of the second half shell (2).

9. An electrically insulating shell (100) according to one or more of the previous claims, wherein said first half shell (1) comprises a first insulating barrier (20), a second insulating barrier (21), a third insulating barrier (22), and a fourth insulating barrier (23) which all extend from one side of said first base wall (8) substantially parallel to each other and to said first side walls (9), said first and second insulating barriers (20, 21) being positioned close to and spaced apart from each other of a first space (25), said third and fourth insulating barriers (22, 23) being positioned close to and spaced apart from each other of a second space (26), and wherein said second half shell (2) comprises a fifth insulating barrier (27) and a sixth insulating barrier (28) which extend from one side of said second base wall (12) substantially parallel to each other and to said second side walls (13), said fifth insulating barrier (27) and said sixth insulating barrier (28) being adapted to enter said first space (25) and said second space (26), respectively, when said first and second half shells (1, 2) are mutually connected.

10. An electrically insulating device (300) **characterized in that** it comprises one or more insulating shells (100) according to one or more of the previous claims, and an insulating plate (102) having a central part perforated with one or more holes (103) inside each of which the second portion (5) of a corresponding insulating shell (100) is suitable to be inserted.

11. An electrically insulating device (300) according to claim 10, wherein said insulating plate (102) comprises one or more side walls (104) which protrude transversally from said central part and are adapted to be mechanically connected to another component.

12. A switchgear panel (400) comprising a cabinet (401), a circuit breaker (150) positioned inside said cabinet and suitable to be electrically connected in input and output to an associated electrical circuit along electrical connection paths formed each by one or more conductive pieces, **characterized in that** it comprises at least one electrically insulating shell (100) according to one or more of claims 1-9, said at least one insulating shell (100) being operatively positioned along one of said conductive path so as to electrically insulate at least a portion of the path from the surrounding environment.

13. A switchgear panel (400) comprising a cabinet (401), a circuit breaker (150) positioned inside said cabinet and having a plurality of connection contacts (50, 60) suitable to be electrically connected each to a corresponding contact piece (70, 80) of an associated electrical circuit along a respective connection path formed by one or more conductive pieces, **characterized in that** it comprises an electrically insulating device (300) according to one or more of claims 10-11, and wherein said insulating plate (102) comprises one or more side walls (104) which protrudes transversally from said central part and are mechanically connected to a further component of the panel

## Patentansprüche

1. Elektrisch isolierender Mantel (100), geeignet, um operativ einem elektrischen Leiter (200) zugeordnet zu werden, der einen oder mehrere miteinander verbundene Teile aufweist, wobei der isolierende Mantel (100) einen ersten Halbmantel (1) und einen zweiten Halbmantel (2) aufweist, die dazu dienen, jeweils miteinander verbunden zu werden, **dadurch gekennzeichnet, dass** der erste Halbmantel (1) und der zweite Halbmantel (2) so geformt sind, dass sie, sobald sie miteinander verbunden sind, einen zentralen Teil (3) definieren, der einen im Wesentlichen geschlossenen Raum begrenzt, der in seinem Inneren einen entsprechenden ersten Abschnitt (201) des elektrischen Leiters (200) umhüllt, wobei ein erster hohler Abschnitt (4) aus einer ersten Seite des zentralen Teils (3) herausragt, wobei zwischen dem ersten hohlen Abschnitt (4) und dem Innenraum des geschlossenen zentralen Teils (3) eine räumliche Verbindung besteht und der erste hohle Abschnitt darauf ausgelegt ist, einen entsprechenden zweiten Abschnitt (202) des elektrischen Leiters zu umgeben, der für die Verbindung mit einem Kontaktstück (70) eines Stromkreises geeignet ist, und wobei ein zweiter hohler Abschnitt (5) von einer zweiten Seite, die der ersten Seite gegenüberliegt, aus dem zentralen Teil (3) herausragt, wobei zwischen dem zweiten hohlen Abschnitt (5) und dem Innenraum des geschlossenen zentralen Teils (3) eine räumliche Verbindung besteht und der zweite hohle Abschnitt darauf ausgelegt ist, einen entsprechenden dritten Abschnitt (203) des elektrischen Leiters (200) zu umgeben, der für die Verbindung mit einem Verbindungskontakt (50) eines Leistungsschalters (150) geeignet ist, der dem Stromkreis zugeordnet ist, und wobei zumindest eines von dem ersten Halbmantel (1) und dem zweiten Halbmantel (2) einen geformten Körper aufweist, der eine Mehrzahl an Referenzkerben (30) aufweist, die darauf ausgelegt sind, ein Wegschneiden von Abschnitten des geformten Körpers zu ermöglichen.

2. Elektrisch isolierender Mantel (100) nach einem oder mehreren der vorgenannten Ansprüche, wobei der erste Halbmantel (1) und der zweite Halbmantel (2) ein erstes Kupplungsmittel (6) bzw. ein zweites Kupplungsmittel (7) aufweisen, die geeignet sind, ineinander einzugreifen, so dass sie mechanisch den ersten Halbmantel (1) und den zweiten Halbmantel (2) rastend miteinander verbinden.

3. Elektrisch isolierender Mantel (100) nach einem oder mehreren der vorgenannten Ansprüche, wobei der erste Halbmantel (1) einen geformten Körper aufweist, der eine erste Basiswand (8), eine oder mehrere erste Seitenwände (9), die transversal von der ersten Basiswand (8) herausragen, und das erste Kupplungsmittel (6) aufweist, das einen oder mehrere Zähne (6) aufweist, die sich an zumindest einer der einen oder mehreren ersten Seitenwände (9) befinden, und wobei der erste hohle Abschnitt (4) einen ersten hohlen Röhrenabschnitt (4) aufweist, der mit der ersten Basiswand (8) einstückig ausgeführt ist und rechtwinklig in einer Richtung aus dieser herausragt, die der der einen oder mehreren ersten Seitenwänden (9) gegenüberliegt.

4. Elektrisch isolierende Vorrichtung (100) nach Anspruch 3, wobei der erste Halbmantel (1) eine erste Mehrzahl an Referenzkerben (30) aufweist, die sich zumindest entlang der ersten Basiswand (8) befinden und darauf ausgelegt sind, ein Wegschneiden von Abschnitten des geformten Körpers zu ermöglichen, so dass die Länge des ersten Halbmantels (1) eingestellt wird.

5. Elektrisch isolierender Mantel (100) nach einem oder mehreren der vorgenannten Ansprüche, wobei der erste Halbmantel (1) eine erste Mehrzahl an Zentrierungsgraten (11) aufweist, die sich an der inneren Oberfläche des ersten hohlen Röhrenabschnitts (4) befinden.

6. Elektrisch isolierender Mantel (100) nach einem oder mehreren der vorgenannten Ansprüche, wobei der zweite Halbmantel (2) einen geformten Körper, der eine zweite Basiswand (12) aufweist, und eine oder mehrere zweite Seitenwände (13), die transversal von der zweiten Basiswand (12) herausragen, aufweist, wobei das zweite Kupplungsmittel (7) Haken (7) aufweist, die sich an zumindest einer der einen oder mehreren zweiten Seitenwände (13) befinden, und wobei der zweite hohle Abschnitt (5) einen zweiten hohlen Röhrenabschnitt (5) aufweist, der mit der zweiten Basiswand (12) einstückig ausgeführt ist und rechtwinklig in einer Richtung aus dieser herausragt, die der der einen oder mehreren zweiten Seitenwänden (13) gegenüberliegt.

7. Elektrisch isolierender Mantel (100) nach einem oder mehreren der vorgenannten Ansprüche, wobei der zweite hohle Röhrenabschnitt (5) eine Bodenwand (14) aufweist, die einen zentralen Teil aufweist, der ein Hauptloch (15) aufweist, wobei die Bodenwand (14) eine oder mehrere Kerben (31, 32) aufweist, so dass ein Wegschneiden des zentralen Teils, der das Hauptloch (15) aufweist, ermöglicht wird.

8. Elektrisch isolierender Mantel (100) nach einem oder mehreren der Ansprüche 7 und 8, wobei der zweite Halbmantel (2) eine Mehrzahl an Referenzkerben (30) aufweist, die sich zumindest entlang der zweiten Basiswand (12) befinden und darauf ausgelegt sind, ein Wegschneiden von Abschnitten des geformten Körpers zu ermöglichen, um die Länge des zweiten Halbmantels (2) einzustellen.

9. Elektrisch isolierender Mantel (100) nach einem oder mehreren der vorgenannten Ansprüche, wobei der erste Halbmantel (1) eine erste isolierende Barriere (20), eine zweite isolierende Barriere (21), eine dritte isolierende Barriere (22), und eine vierte isolierende Barriere (23) aufweist, die all von einer Seite der ersten Basiswand (8) im Wesentlichen parallel zueinander zu den ersten Seitenwänden (9) verlaufen, wobei die erste und zweite isolierende Barriere (20, 21) nah bei einem ersten Raum (25) und voneinander beabstandet angeordnet sind, wobei die dritte und vierte isolierende Barriere (22, 23) nah bei einem zweiten Raum (26) und voneinander beabstandet angeordnet sind, und wobei der zweite Halbmantel (2) eine fünfte isolierende Barriere (27) und eine sechste isolierende Barriere (28) aufweist, die von einer Seite der zweiten Basiswand (12) im Wesentlichen parallel zueinander und zu den zweiten Seitenwänden (13) verlaufen, wobei die fünfte isolierende Barriere (27) und die sechste isolierende Barriere (28) darauf ausgelegt sind, in den ersten Raum (25) bzw. den zweiten Raum (26) einzutreten, wenn die ersten und zweiten Halbmäntel (1, 2) miteinander verbunden sind.

10. Elektrisch isolierende Vorrichtung (300), **dadurch gekennzeichnet, dass** sie einen oder mehrere isolierende Mäntel (100) nach einem oder mehreren der vorgenannten Ansprüche und eine isolierende Platte (102) aufweist, die einen zentralen Teil aufweist, der mit einem oder mehreren Löchern (103) perforiert ist, wobei in jedes dieser Löcher der zweite Abschnitt (5) eines entsprechenden isolierenden Mantels (100) eingeführt werden kann.

11. Elektrisch isolierende Vorrichtung (300) nach Anspruch 10, wobei die isolierende Platte (102) eine oder mehrere Seitenwände (104) aufweist, die transversal aus dem zentralen Teil herausragen und darauf ausgelegt sind, mechanisch mit einer anderen Komponente verbunden zu werden.

12. Schaltanlagen-Konsole (400), aufweisend einen Schrank (401) und einen Leistungsschalter (150), der sich in dem Schrank befindet und geeignet ist, am Eingang und Ausgang elektrisch mit einem zugeordneten Stromkreis entlang elektrischer Verbindungspfade verbunden zu werden, die jeweils durch eines oder mehrere leitende Stücke gebildet werden, **dadurch gekennzeichnet, dass** sie zumindest einen elektrisch isolierenden Mantel (100) nach einem oder mehreren der Ansprüche 1 bis 9 aufweist, wobei der zumindest eine isolierende Mantel (100) operativ entlang einem der leitenden Pfade angeordnet ist, so dass er zumindest einen Abschnitt des Pfads elektrisch von der Umgebung isoliert.

13. Schaltanlagen-Konsole (400), aufweisend einen Schrank (401) und einen Leistungsschalter (150), der sich in dem Schrank befindet und eine Mehrzahl an Verbindungskontakten (50, 609 aufweist, die geeignet sind, jeweils mit einem entsprechenden Kontaktstück (70, 80) eines zugeordneten Stromkreises entlang eines jeweiligen Verbindungspfads elektrisch verbunden zu werden, der durch eines oder mehrere leitende Stücke gebildet wird, **dadurch gekennzeichnet, dass** sie eine elektrisch isolierende Vorrichtung (300) nach einem oder mehreren der Ansprüche 10 bis 11 aufweist, und wobei die isolierende Platte (102) eine oder mehrere Seitenwände (104) aufweist, die transversal aus dem zentralen Teil herausragen und mechanisch mit einer weiteren Komponente der Konsole verbunden sind.

## Revendications

1. Coque électriquement isolante (100) appropriée pour être associée de manière fonctionnelle à un conducteur électrique (200) comprenant une ou plusieurs pièce(s) reliées ensemble, la coque isolante (100) comprenant une première demi-coque (1) et une deuxième demi-coque (2) conçues pour être mutuellement reliées l'une à l'autre, **caractérisée en ce que** ladite première demi-coque (1) et ladite deuxième demi-coque (2) sont mises en forme de manière à définir, une fois reliées l'une à l'autre, une partie centrale (3) délimitant un espace essentiellement fermé enfermant dedans une première partie correspondante (201) dudit conducteur électrique (200), une première partie creuse (4) faisant saillie à partir d'un premier côté de ladite partie centrale (3), ladite première partie creuse (4) étant en communication spatiale avec l'espace interne de ladite partie centrale fermée (3) et adaptée pour entourer une deuxième partie correspondante (202) dudit conducteur électrique appropriée pour être reliée à une pièce de contact (70) d'un circuit électrique, et une deuxième partie creuse (5) faisant saillie à partir de ladite partie centrale (3) d'un deuxième côté opposé audit premier côté, ladite deuxième partie creuse (5) étant en communication spatiale avec l'espace interne de ladite partie centrale fermée (3) et adaptée pour entourer une troisième partie correspondante (203) dudit conducteur électrique (200) appropriée pour être reliée à un contact de connexion (50) d'un disjoncteur (150) associé audit circuit électrique, et dans lequel au moins l'une parmi lesdites première demi-coque (1) et deuxième demi-coque (2) comprend un corps ayant une pluralité d'encoches de référence (30) adaptées pour permettre de découper des parties du corps mis en forme lui-même.

2. Coque électriquement isolante (100) selon l'une ou plusieurs des revendications précédentes, dans laquelle ladite première demi-coque (1) et ladite deuxième demi-coque (2) comprennent un premier moyen de couplage (6) et un deuxième moyen de couplage (7), respectivement, qui sont appropriés pour s'engager mutuellement de manière à relier mécaniquement ladite première demi-coque (1) et ladite deuxième demi-coque (2) l'une à l'autre par encliquetage.

3. Coque électriquement isolante (100) selon l'une ou plusieurs des revendications précédentes, dans laquelle ladite première demi-coque (1) comprend corpsayant une première paroi de base (8), une ou plusieurs première(s) paroi(s) latérale(s) (9) faisant saillie transversalement à partir de ladite première paroi de base (8), ledit premier moyen de couplage (6) comprenant une ou plusieurs dent(s) (6) prévue(s) sur au moins l'une de ladite/desdites une ou plusieurs première(s) paroi(s) latérale(s) (9), et dans laquelle ladite première partie creuse (4) comprend une première partie tubulaire creuse (4) qui est rendue solidaire à ladite première paroi de base (8) et fait saillie perpendiculairement à partir de celle-ci dans une direction opposée à celle de ladite/desdites une ou plusieurs première(s) paroi(s) latérale(s) (9).

4. Dispositif électriquement isolant (100) selon la revendication 3, dans lequel ladite première demi-coque (1) comprend une première pluralité d'encoches de référence (30) qui sont prévues au moins le long de ladite première paroi de base (8) et sont adaptées pour permettre de découper des parties de son corps mis en forme de manière à ajuster la longueur de la première demi-coque (1).

5. Coque électriquement isolante (100) selon l'une ou plusieurs des revendications précédentes, dans laquelle ladite première demi-coque (1) comprend une première pluralité d'ailettes de centrage (11) prévues sur la surface interne de ladite première partie tubulaire creuse (4).

6. Coque électriquement isolante (100) selon l'une ou plusieurs des revendications précédentes, dans laquelle ladite deuxième demi-coque (2) comprend un corps ayant une deuxième paroi de base (12), une ou plusieurs deuxième(s) paroi(s) latérale(s) (13) faisant saillie transversalement à partir de ladite deuxième paroi de base (12), ledit deuxième moyen de couplage (7) comprenant des crochets (7) prévus sur au moins l'une de ladite/desdites une ou plusieurs deuxième(s) paroi(s) latérale(s) (13), et dans laquelle ladite deuxième partie creuse (5) comprend une deuxième partie tubulaire creuse (5) qui est rendue solidaire à ladite deuxième paroi de base (12) et fait saillie perpendiculairement à partir de celle-ci dans une direction opposée à celle de ladite/desdites une ou plusieurs deuxième(s) paroi(s) latérale(s) (13).

7. Coque électriquement isolante (100) selon l'une ou plusieurs des revendications précédentes, dans laquelle ladite deuxième partie tubulaire creuse (5) comporte une paroi de fond (14) ayant une partie centrale comprenant un trou principal (15), ladite paroi de fond (14) comprenant une ou plusieurs encoche(s) (31, 32) de manière à permettre de découper ladite partie centrale comprenant ledit trou principal (15).

8. Coque électriquement isolante (100) selon l'une ou plusieurs des revendications 7 et 8, dans laquelle ladite deuxième demi-coque (2) comprend une pluralité d'encoches de référence (30) qui sont prévues au moins le long de ladite deuxième paroi de base (12) et sont adaptées pour permettre de découper des parties de son corps mis en forme de manière à ajuster la longueur de la deuxième demi-coque (2).

9. Coque électriquement isolante (100) selon l'une ou plusieurs des revendications précédentes, dans laquelle ladite première demi-coque (1) comprend une première barrière isolante (20), une deuxième barrière isolante (21), une troisième barrière isolante (22), et une quatrième barrière isolante (23), qui s'étendent toutes à partir d'un côté de ladite première paroi de base (8) essentiellement en parallèle les unes avec les autres et avec lesdites premières parois latérales (9), lesdites première et deuxième barrières isolantes (20, 21) étant positionnées l'une à proximité de l'autre et de manière espacée l'une de l'autre d'un premier espace (25), lesdites troisième et quatrième barrières isolantes (22, 23) étant positionnées l'une à proximité de l'autre et de manière espacée l'une de l'autre d'un deuxième espace (26), et dans laquelle ladite deuxième demi-coque (2) comprend une cinquième barrière isolante (27) et une sixième barrière isolante (28) qui s'étendent à partir d'un côté de ladite deuxième paroi de base (12) essentiellement en parallèle l'une avec l'autre et avec lesdites deuxièmes parois latérales (13), ladite cinquième barrière isolante (27) et ladite sixième barrière isolante (28) étant adaptées pour entrer dans ledit premier espace (25) et dans ledit deuxième espace (26), respectivement, lorsque lesdites première et deuxième demi-coques (1, 2) sont mutuellement reliées.

10. Dispositif électriquement isolant (300), **caractérisé en ce qu'**il comprend une ou plusieurs coque(s) isolante(s) (100) selon l'une ou plusieurs des revendications précédentes, et une plaque isolante (102) ayant une partie centrale perforée avec un ou plusieurs trou(s) (103) à l'intérieur de chacun desquels la deuxième partie (5) d'une coque isolante correspondante (100) est appropriée pour être insérée.

11. Dispositif électriquement isolant (300) selon la revendication 10, dans lequel ladite plaque isolante (102) comprend une ou plusieurs paroi(s) latérale(s) (104) qui fait/font saillie transversalement à partir de ladite partie centrale et est/sont adaptée(s) pour être reliée(s) mécaniquement à un autre composant.

12. Panneau d'appareillage de commutation (400) comprenant un coffret (401), un disjoncteur (150) positionné à l'intérieur dudit coffret et approprié pour être électriquement relié en entrée et en sortie à un circuit électrique associé le long de chemins de connexion électriques formés chacun par une ou plusieurs pièce(s) conductrice(s), **caractérisé en ce qu'**il comprend au moins une coque électriquement isolante (100) selon l'une ou plusieurs des revendications 1 à 9, ladite au moins une coque isolante (100) étant positionnée de manière fonctionnelle le long de l'un desdits chemins conducteurs de manière à isoler électriquement au moins une partie du chemin du milieu environnant.

13. Panneau d'appareillage de commutation (400) comprenant un coffret (401), un disjoncteur (150) positionné à l'intérieur dudit coffret et ayant une pluralité de contacts de connexion (50, 60) appropriés pour être reliés électriquement chacun à une pièce de contact correspondante (70, 80) d'un circuit électrique associé le long d'un chemin de connexion respectif formé par une ou plusieurs pièce(s) conductrice(s), **caractérisé en ce qu'**il comprend un dispositif électriquement isolant (300) selon l'une ou plusieurs des revendications 10 à 11, et dans lequel ladite plaque isolante (102) comprend une ou plusieurs paroi(s) latérale(s) (104) qui fait/font saillie transversalement à partir de ladite partie centrale et est/sont reliée(s) mécaniquement à un autre composant du panneau.
